# EUROPÄISCHE PATENTANMELDUNG

(11) **EP 0 600 190 A1**
(43) Veröffentlichungstag der Anmeldung: **08.06.1994**
(21) Anmeldenummer: 93116286.1
(22) Anmeldetag: 08.10.1993
(51) Int. Cl.: H02K 5/22

(54) **Elektromotor, insbesondere Kleinmotor**

(30) Priorität: 03.12.1992 DE 9216478 U
(71) Anmelder: MAICO ELEKTROAPPARATE-FABRIK GmbH, D-78056 Villingen-Schwenningen (DE)
(72) Erfinder: Krösche, Herbert, D-78647 Trossingen (DE)
(74) Vertreter: Grosse, Rainer, Dipl.-Ing.

(57) **Zusammenfassung**

Die Erfindung betrifft einen Elektromotor (1), insbesondere Kleinmotor, mit einem Stator (2) und einem Rotor (3), wobei der als Blechpaket (4) ausgebildete Stator eine Statorwicklung (15) mit mehreren Wicklungsteilen (16,17) aufweist, die jeweils auf einem aus Kunststoff bestehenden Spulenkörper (18,19) angeordnet sind, der zwei, einen Wicklungsaufnahmeraum zwischen sich abgrenzende Flansche (äußerer (21) und innerer (20) Flansch) aufweist, die das Blechpaket (4) des Stators (2) jeweils mit einem Abschnitt axial, das heißt, in Richtung der Längsachse der Welle des Rotors (3), überragen, und mit einer Kontaktvorrichtung, die in Aufnahmetaschen (32) angeordnete, mit der Statorwicklung (15) elektrisch verbundene Steckkontakte (35) für damit kontaktierbare, dem elektrischen Anschluß der Statorwicklung (15) dienende Gegenkontakte aufweist. Es ist vorgesehen, daß an mindestens einem der Abschnitte (41) mindestens eine Aufnahmetasche (32) derart einstückig angespritzt ist, daß die Steckrichtung für die Kontaktierung des Steckkontakts (35) mit dem Gegenkontakt axial verläuft.

## Beschreibung

Die Erfindung betrifft einen Elektromotor, insbesondere Kleinmotor, mit einem Stator und einem Rotor, wobei der als Blechpaket ausgebildete Stator eine Statorwicklung mit mehreren Wicklungsteilen aufweist, die jeweils auf einem aus Kunststoff bestehenden Spulenkörper angeordnet sind, der zwei, einen Wicklungsaufnahmeraum zwischen sich abgrenzende Flansche (äußerer und innerer Flansch) aufweist, die das Blechpaket des Stators jeweils mit einem Abschnitt axial, das heißt, in Richtung der Längsachse der Welle des Rotors, überragen, und mit einer Kontaktvorrichtung, die in Aufnahmetaschen angeordnete, mit der Statorwicklung elektrisch verbundene Steckkontakte für damit kontaktierbare, dem elektrischen Anschluß der Statorwicklung dienende Gegenkontakte aufweist.

Aus der deutschen Offenlegungsschrift 39 20 467 ist ein Elektromotor der eingangs genannten Art bekannt. Dieser Motor weist zwei mit dem Stator vernietete Lagerbügel auf, in denen der Rotor drehbar geführt ist. Auf der einen Seite des Stators ist ein Isolierstoffring angeordnet, der mit von den den zugehörigen Lagerbügel befestigenden Nieten gehalten wird. Am Isolierstoffring sind Aufnahmetaschen für Steckkontakte ausgebildet, an die die Statorwicklung angeschlossen ist. Der Aufbau des bekannten Elektromotors ist relativ aufwendig; überdies läßt sich die Statorwicklung erst nach der Endmontage des Motors an die Steckkontakte anschließen.

Der Erfindung liegt die Aufgabe zugrunde, die vorstehend erwähnten Nachteile zu beseitigen.

Diese Aufgabe wird erfindungsgemäß dadurch gelöst, daß an mindestens einem der Abschnitte mindestens eine Aufnahmetasche derart einstückig angespritzt ist, daß die Steckrichtung für eine Kontaktierung des Steckkontakts mit dem Gegenkontakt axial verläuft.

Durch die einstückige Ausbildung von Spulenkörper und Aufnahmetasche ergibt sich ein einfacher Aufbau, der nur einen geringen Montageaufwand erfordert. Der Spulenkörper wird als Kunststoff-Spritzgußteil hergestellt, wobei die Aufnahmetasche im gleichen Arbeitsgang mit angespritzt wird. Durch die Ausrichtung der Aufnahmetasche derart, daß die Steckrichtung für eine Kontaktierung des Steckkontakts mit dem Gegenkontakt axial, also in Richtung der Längsachse der Welle des Rotors, verläuft, kann die Statorwicklung selbsttätig mit entsprechenden Gegenkontakten verbunden werden. Der Elektromotor wird -zum Beispiel bei einem Einbau in ein Ventilatorgehäuse- axial in eine entsprechende Aufnahme eingeschoben, wobei einerseits der Motor befestigt und andererseits gleichzeitig der elektrische Kontakt der Steckkontakte mit den Gegenkontakten erstellt wird. Die Steckkontakte können als Stiftkontakte oder Buchsenkontakte ausgebildet sein. Die verwendeten Gegenkontakte haben eine entsprechend korrespondierende Ausbildung. Der Einsatz mehrerer Spulenkörper, die jeweils einen Wicklungsteil der Statorwicklung tragen, führt zur Ausbildung mehrerer Abschnitte, so daß beispielsweise an zwei Abschnitten jeweils eine Aufnahmetasche ausgebildet sein kann. An die beiden zugehörigen Steckkontakte sind dann Anfang und Ende der Statorwicklung angeschlossen. Nach einem anderen Ausrührungsbeispiel ist es selbstverständlich auch möglich, daß an einen Abschnitt beide Aufnahmetaschen für die Steckkontakte angespritzt sind. Sofern es sich nicht -wie vorstehend- um eine einphasige Ausbildung des Elektromotors, sondern um eine mehrphasige, beispielsweise um eine dreiphasige Bauform handelt, sind an einem Abschnitt sämtliche Aufnahmetaschen ausgebildet, oder es ist auch möglich, die Aufnahmetaschen über die verschiedenen Abschnitte zu verteilen. Die Erfindung unterliegt hier keiner Einschränkung. Das direkte Anspritzen der Aufnahmetasche beziehungsweise der Aufnahmetaschen an den Spulenkörper hat ferner den Vorteil, daß eine komplette Vormontage des mit Wicklung versehenen Spulenkörpers beziehungsweise mehrerer mit Wicklungsteilen versehener Spulenkörper erfolgen kann, bei denen die Drahtenden der Statorwicklung bereits an die in den Aufnahmetaschen befindlichen Steckkontakte angeschlossen sind. Dieses komplette Bauteil läßt sich dann -ohne daß Verdrahtungsarbeiten erforderlich sind- bei der Endmontage dem Statorblechpaket auf einfache Weise zuordnen. Bereits im Vorfeld kann eine elektrische Prüfung der vormontierten Statorwicklung erfolgen, wobei diese Prüfung die Anschlußkomponenten mit umfaßt. Auf diese Art und Weise lassen sich defekte Wicklungen aussondern, bevor sie mit anderen Teilen des Motors zusammengebaut worden sind.

Nach einem Ausführungsbeispiel der Erfindung ist vorgesehen, daß die Aufnahmetasche am äußeren Flansch angeordnet ist. Vorzugsweise befindet sich die Aufnahmetasche an der Außenseite des äußeren Flansches. An dieser Außenseite steht hinreichend Platz zur Verfügung und überdies liegt der Steckkontaktanschluß dort gut geschützt, da er sich im Eckbereich der Stirnseite des Stator-Blechpakets und dem zugeordneten Flansch des Spulenkörpers befindet. Alternativ ist es jedoch auch möglich, die Aufnahmetasche an dem inneren Flansch anzuordnen, wobei -je nach Läuferausbildung- auch eine Anordnung an der Innenseite des inneren Flansches in Frage kommt. Sofern die Aufnahmetasche an der Innenseite des äußeren Flansches oder an der Außenseite des inneren Flansches angeordnet ist, befindet sie sich innerhalb des Wicklungsaufnahmeraumes. Diese Ausgestaltung setzt voraus, daß hinreichend Platz für die Drahtwindungen der Statorwicklung verbleibt. Die Anordnung innerhalb des Wicklungsaufnahmeraumes hat den Vorteil, daß die Wicklungsenden nicht durch die Flansche hindurchgeführt werden müssen, um sie mit den Steckkontakten verbinden zu können, sondern die Wicklungsenden werden direkt innerhalb des Wicklungsaufnahmeraumes den zugehörigen Steckkontakten zugeordnet.

Der äußere Flansch weist vorzugsweise einen an seine Statorpol-Durchtrittsöffnung in axialer Richtung angrenzenden zentralen Bereich auf, an dem die Aufnahmetasche angespritzt ist. Damit befindet sich die Aufnahmetasche -in axialer Richtung betrachtetetwa in mittiger Position zum entsprechenden Wicklungsteil der Statorwicklung beziehungsweise in mittiger Position zum zugehörigen Statorpol.

Nach einem bevorzugten Ausführungsbeispiel der Erfindung ist vorgesehen, daß von beiden Seiten des zentralen Bereichs flexible Flanschlappen einstückig ausgehen, die in Umfangsrichtung des Stators abgebogen sind und die Seiten der Statorwicklung überfangen. Während der zentrale, die Aufnahmetasche aufweisende Bereich relativ starr ausgebildet ist und insofern die Steckkontakte in vorgegebener Position hält, lassen sich die Flanschlappen nach Aufwickeln des Wicklungsteiles der Statorwicklung auf den entsprechenden Spulenkörper in Umfangsrichtung des Stators abbiegen, wodurch sie die Seiten der Statorwicklung schützen und auch elektrisch gegenüber dem Blechpaket des Stators isolieren. Vorzugsweise werden die freien Enden der Flanschlappen mittels einer Rastverbindung an dem Spulenkörper gehalten.

Nach einem bevorzugten Ausführungsbeispiel ist jedem Wicklungsteil ein einstückiger Spulenkörper zugeordnet. Hierdurch verringert sich die Anzahl der Bauteile des Elektromotors.

Bei einer einphasigen Ausbildung des Elektromotors sind vorzugsweise zwei, diametral zur Welle des Rotors gegenüberliegende Spulenkörper vorgesehen. Jeder Spulenkörper weist einen äußeren Flansch auf, an dessen Außenseite sich eine Aufnahmetasche befindet. Zum Lagern des Rotors kann der Elektromotor Lagerbügel aufweisen, wobei diese Lagerbügel zu den Aufnahmetaschen bei der vorstehend genannten einphasigen Ausbildung um 90 versetzt liegen.

Sofern sich die Aufnahmetaschen an der Außenseite des äußeren Flansches befindet, weist dieser einen Durchbruch für das Anschlußdrahtende der Statorwicklung auf, der mit einem Ende in den Wicklungsaufnahmeraum und mit dem anderen Ende in die Aufnahmetasche mündet.

Vorzugsweise besitzt der Motor einen Wellenstutzen, wobei sich die mit den Aufnahmetaschen versehenen Abschnitte der Flansche auf der dem Wellenstutzen gegenüberliegenden Motorseite befinden.

Ferner ist es vorteilhaft, wenn jeder Spulenkörper auf einen Statorpol aufgesteckt und dadurch gehalten ist. Weitere Maßnahmen sind für eine Befestigung nicht erforderlich. Mit dem Aufstecken der Spulenkörper ist gleichzeitig die jeweilige mit Steckkontakt versehene Aufnahmetasche in Position gebracht, da sie sich ja einstückig an dem Spulenkörper befindet. Zusätzliche Maßnahmen zur Befestigung der Aufnahmetasche beziehungsweise der elektrischen Kontakteinrichtungen sind daher nicht erforderlich.

Jede Aufnahmetasche ist vorzugsweise von einem die Außenseite des äußeren Flansches überragenden Gehäuse gebildet, in dem sich der Steckkontakt befindet. Vorzugsweise läßt sich der Steckkontakt in das Innere der Aufnahmetasche einklipsen, so daß er unverlierbar dort gehalten ist.

Weitere vorteilhafte Ausführungsformen sind durch die Unteransprüche gekennzeichnet.

Die Zeichnung veranschaulicht die Erfindung anhand eines Ausführungsbeispiels und zwar zeigt:
Figur 1 eine Draufsicht auf einen Elektromotor,
Figur 2 eine Stirnansicht auf den Elektromotor der Figur 1
Figur 3 eine Detailansicht einer mit Steckkontakt versehenen Aufnahmetasche einer Kontaktvorrichtung des Elektromotors,
Figur 4 eine Seitenansicht der Aufnahmetasche gemäß Figur 3 im Schnitt,
Figur 5 einen Spulenkörper mit einem Wicklungsteil der Statorwicklung des Elektromotors, wobei sich ein Flanschlappen des Spulenkörpers in aufgeklappter Stellung befindet und
Figur 6 eine Darstellung gemäß Figur 5, jedoch mit in Schließstellung befindlichem Flanschlappen.

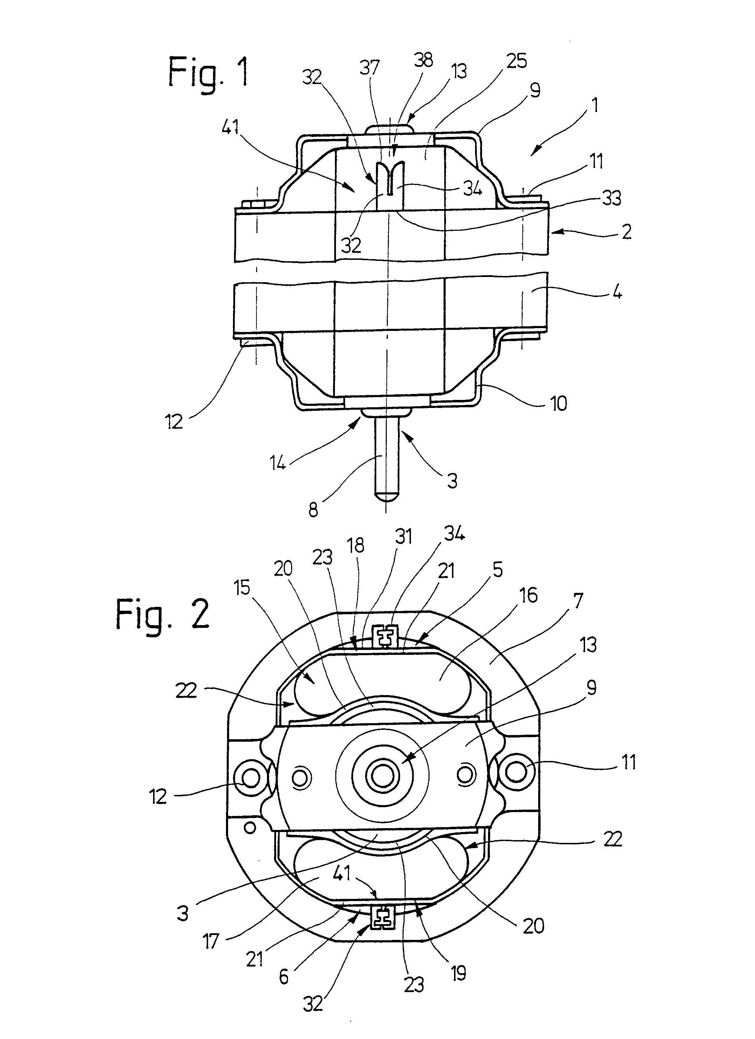

Die Figur 1 zeigt einen als Kleinmotor ausgebildeten Elektromotor 1, der beispielsweise als Antriebsmotor eines Ventilators eingesetzt sein kann. Er besitzt einen Stator 2 sowie einen Rotor 3. Der Stator 2 ist als Blechpaket 4 ausgebildet, welches zwei Statorpole 5 und 6 sowie ein ringförmiges Joch 7 umfaßt. Die beiden Statorpole 5, 6 sind zusammenhängend als ein aus Einzelblechen zusammengefügtes Paket ausgebildet, das einen Durchbruch für den Rotor 3 aufweist und das in das ringförmige Joch 7 axial eingeschoben ist.

Der Rotor 3 weist an einem Ende einen Wellenstutzen 8 auf, an dem zum Beispiel bei einem Einsatz als Ventilator das Lüfterrad befestigt wird.

Der Rotor 3 ist mittels zweier Lagerbügel 9 und 10 drehbar geführt. Die Lagerbügel 9, 10 sind mittels Niete 11 und 12 am Stator 2 und zwar am ringförmigen Joch 7 befestigt. Sie weisen Lager 13, 14 für den Rotor 3 auf.

Der Stator 2 ist mit einer Statorwicklung 15 versehen, die aus zwei Wicklungsteilen 16 und 17 besteht. Jeder Wicklungsteil 16, 17 ist auf einem Spulenkörper 18, 19 aufgewickelt, der aus isolierendem Kunststoff besteht und auf den jeweiligen Statorpol 5 beziehungsweise 6 radial aufgeschoben ist. Jeder Spulenkörper 18, 19 besitzt einen inneren Flansch 20 sowie einen äußeren Flansch 21. Die beiden Flansche 20 und 21 bilden zwischen sich einen Wicklungsaufnahmeraum 22 aus, der den entsprechenden Wicklungsteil 16 beziehungsweise 17 der Statorwicklung 15 aufnimmt. Die Innenseite des inneren Flansches 20 liegt etwa auf gleicher Höhe mit der Polfläche des zugeordneten Statorpols 5 beziehungsweise 6, die unter Bildung eines Luftspalts 23 dem Rotor 3 gegenüberliegt. Die Flansche 20 beziehungsweise 21 überragen in axialer Richtung das Blechpaket des Stators 2 mit je einen Abschnitt 41.

Aus der Figur 2 sowie den Figuren 5 und 6 ist der Aufbau des Spulenkörpers 18 beziehungsweise 19 deutlich erkennbar. Die beiden Spulenkörper 18 und 19 sind identisch aufgebaut, so daß es ausreicht, im nachstehenden lediglich auf einen Spulenkörper, nämlich den Spulenkörper 18, einzugehen. Dieser wird von einer Statorpol-Durchtrittsöffnung 24 durchsetzt, das heißt, bei der Montage wird der Spulenkörper 18 auf den entsprechenden Statorpol 5 beziehungsweise 6 radial derart aufgeschoben, daß dieser Statorpol die Statorpol-Durchtrittsöffnung 24 durchgreift. Der äußere Flansch 21 weist einen zentralen Bereich 25 auf. Von beiden Seiten 26 und 27 des zentralen Bereichs 25 gehen einstückig flexible Flanschlappen 28 aus. Diese werden beim Bewickeln des Spulenkörpers 18 etwa in die Höhe des zentralen Bereichs 25 aufgebogen, so daß der Wicklungsaufnahmeraum 22 einwandfrei zugänglich ist.

Ist das Wicklungsteil 16 aufgewickelt, so werden die Flanschlappen 28 derart abgebogen, daß sie die Seiten des Wicklungsaufnahmeraumes 22 und damit die Seiten des Wicklungsteils 16 überfangen. Jeder Flanschlappen 28 weist einen Durchbruch 30 auf, mittels dem -zur Befestigung des entsprechenden Flanschlappens 28- ein Aufklipsen auf einen Steg 29 erfolgt.

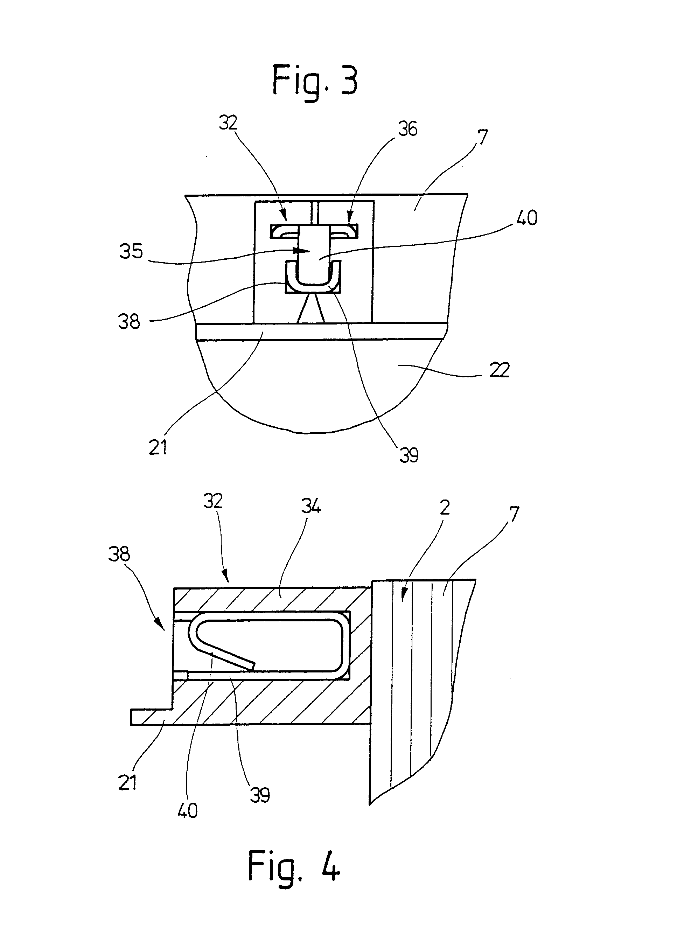

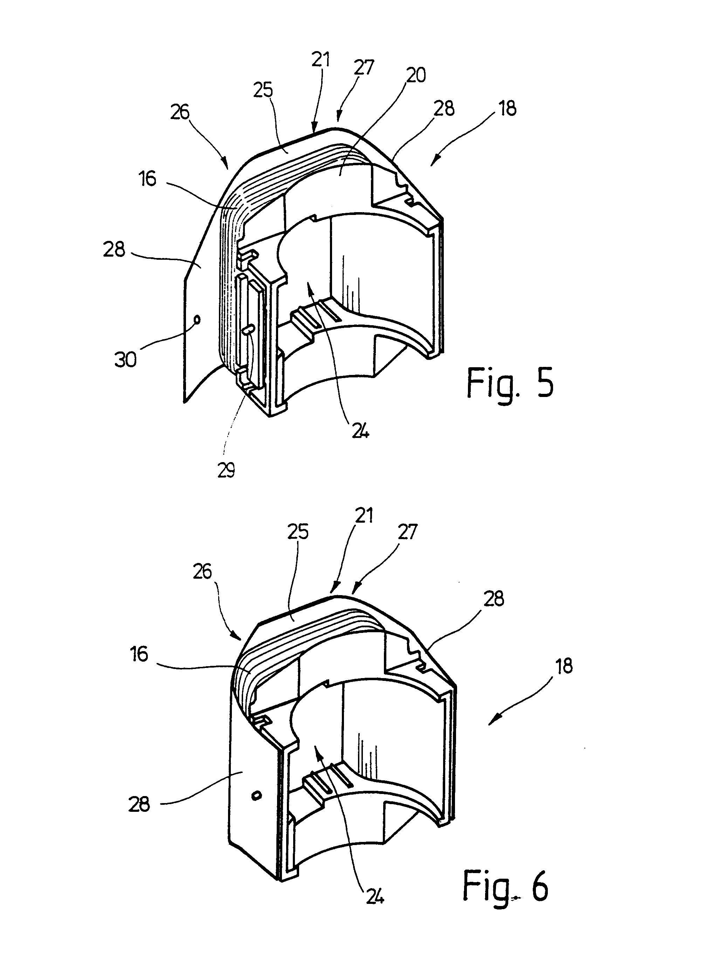

Wesentlich ist, daß an der Außenseite 31 des äußeren Flansches 21 jedes Spulenkörpers 18, 19 eine Aufnahmetasche 32 einstückig angespritzt ist. Diese Aufnahmetasche 32 ist derart positioniert, daß sie -gemäß Figur 1- mittig zum zentralen Bereich 25 liegt und mit ihrer Rückseite 33 an die Statorpol-Durchtrittsöffnung 24 angrenzt. Dies kann -wahlweise nach Bauform- mit mehr oder weniger großem Abstand zwischen der Statorpol-Durchtrittsöffnung 24 und der Rückseite 33 erfolgen. Hierdurch liegt die Rückseite 33 der entsprechenden Stirnseite des ringförmigen Jochs 7 mit mehr oder weniger großem Abstand gegenüber. Jede Aufnahmetasche 32 wird von einem die Außenseite 31 des äußeren Flansches 21 überragenden Gehäuse 34 gebildet, in dem sich ein Steckkontakt 35 befindet. Diese Ausgestaltung geht deutlich aus den Figuren 3 und 4 hervor. Das Gehäuse 32 weist einen etwa Doppel-T-förmigen Hohlraum 36 auf, der -an der Vorderseite 37 des Gehäuses 34- als Einstecköffnung 38 mündet. Von dieser Einstecköffnung 38 her wird der Steckkontakt 35 eingeschoben und im Inneren des Gehäuses 34 verrastet. Der Steckkontakt 35 ist als Kontaktbuchse ausgebildet; er weist ein U-förmiges Aufnahmeteil 39 und eine Kontaktzunge 40 auf. Beim Einschieben eines entsprechenden, nicht dargestellten Gegenkontaktes, wird dieser von dem U-förmigen Aufnahmeteil 39 aufgenommen, wobei die Kontaktzunge 40 wegschwenkt und einen Kontaktdruck auf den Gegenkontakt ausübt. Die Aufnahmetasche 32 hat eine derartige Lage am äußeren Flansch 21 des Spulenkörpers 18 beziehungsweise 19, daß die Steckrichtung für eine Kontaktierung des Steckkontaktes 35 mit dem erwähnten Gegenkontakt in axialer Richtung verläuft. Dabei befinden sich die Aufnahmetaschen 32 auf der Seite der äußeren Flansche 21 der beiden Spulenkörper 18 und 19, die dem Wellenstutzen 8 abgewandt ist.

An die Steckkontakte 35 der beiden Aufnahmetaschen 32 sind die Anschlußdrahtenden der Statorwicklung elektrisch leitend angeschlossen. Vorzugsweise wird zur Zuführung des entsprechenden Drahtendes der äußere Flansch von einem -in den Figuren nicht dargestellten- Durchbruch durchsetzt, wobei der Durchbruch mit einem Ende in den Wicklungsaufnahmeraum und mit dem anderen Ende in die Aufnahmetasche mündet.

Jeder Spulenkörper 18, 19 ist aus flexiblem isolierendem Kunststoff einstückig hergestellt, das heißt, er wird in einem Arbeitsgang gespritzt, wobei sämtliche Teile, wie zum Beispiel die Flansche 20, 21, die Flanschlappen 28, die Aufnahmetasche 32 und auch der Steg 29 mit ausgebildet wird.

Bei der Montage des Elektromotors 1 ist es lediglich erforderlich, auf die als ein Paket ausgebildeten Statorpole 5 und 6 die beiden bereits mit an die entsprechenden Steckkontakte 35 angeschlossenen Wicklungsteilen 16 und 17 der Statorwicklung 15 fertig ausgestaltenden Bauteile aufzuschieben, dann diese Baueinheit axial in das ringförmige Joch 7 einzuschieben und anschließend den Rotor 3 mittels der Lagerbügel 9 und 10 zu installieren. Der fertig montierte Motor kann dann -beispielsweise bei einem Einsatz als Ventilatorantrieb- in das Vetilatorgehäuse in eine entsprechende Aufnahme eingeschoben werden, wobei gleichzeitig dem elektrischen Anschluß dienende Gegenkontakte in die Aufnahmetaschen 32 eintreten und eine elektrische Verbindung zu den Steckkontakten 35 und damit zur Statorwicklung 15 herstellen. Der elektrische Anschluß erfolgt also damit selbsttätig.

## Patentansprüche

1. Elektromotor, insbesondere Kleinmotor, mit einem Stator und einem Rotor, wobei der als Blechpaket ausgebildete Stator eine Statorwicklung mit mehreren Wicklungsteilen aufweist, die jeweils auf einem aus Kunststoff bestehenden Spulenkörper angeordnet sind, der zwei, einen Wicklungsaufnahmeraum zwischen sich abgrenzende Flansche (äußerer und innerer Flansch) aufweist, die das Blechpaket des Stators jeweils mit einem Abschnitt axial, das heißt, in Richtung der Längsachse der Welle des Rotors, überragen, und mit einer Kontaktvorrichtung, die in Aufnahmetaschen angeordnete, mit der Statorwicklung elektrisch verbundene Steckkontakte für damit kontaktierbare, dem elektrischen Anschluß der Statorwicklung dienende Gegenkontakte aufweist, dadurch gekennzeichnet, daß an mindestens einem der Abschnitte (41) mindestens eine Aufnahmetasche (32) derart einstückig angespritzt ist, daß die Steckrichtung für die Kontaktierung des Steckkontakts (35) mit dem Gegenkontakt axial verläuft.

2. Elektromotor nach Anspruch 1, dadurch gekennzeichnet, daß die Aufnahmetasche (32) am äußeren Flansch (21) angeordnet ist.

3. Elektromotor nach einem der vorhergehenden Ansprüche, dadurch gekennzeichnet, daß sich die Aufnahmetasche (32) an der Außenseite (31) des äußeren Flansches (21) befindet.

4. Elektromotor nach einem der vorhergehenden Ansprüche, dadurch gekennzeichnet, daß der äußere Flansch (21) einen an eine Statorpol-Durchtrittsöffnung (24) des Flansches (21) in axialer Richtung angrenzenden zentralen Bereich (25) aufweist, an dem die Aufnahmetasche (32) angespritzt ist.

5. Elektromotor nach einem der vorhergehenden Ansprüche, dadurch gekennzeichnet, daß von beiden Seiten (26, 27) des zentralen Bereichs (25) flexible Flanschlappen (28) einstükkig ausgehen, die in Umfangsrichtung des Stators (2) abgebogen sind und die Seiten der Statorwicklung (Wicklungsteil 16, 17) überfangen.

6. Elektromotor nach einem der vorhergehenden Ansprüche, dadurch gekennzeichnet, daß die freien Enden der Flanschlappen (28) mittels einer Rastverbindung (Steg 29, Durchbruch 30) an dem Spulenkörper (18, 19) einendig in Positon gehalten sind.

7. Elektromotor nach einem der vorhergehenden Ansprüche, dadurch gekennzeichnet, daß jedem Wicklungsteil (16, 17) ein einstückiger Spulenkörper (18, 19) zugeordnet ist.

8. Elektromotor nach einem der vorhergehenden Ansprüche, gekennzeichnet durch zwei, sich diametral zur Welle des Rotors (3) gegenüberliegende Spulenkörper (18, 19).

9. Elektromotor nach einem der vorhergehenden Ansprüche, dadurch gekennzeichnet, daß der äußere Flansch (21) einen Durchbruch für das Anschlußdrahtende der Statorwicklung (15) aufweist, der mit einem Ende in den Wicklungsaufnahmeraum (22) und mit dem anderen Ende in die Aufnahmetasche (32) mündet.

10. Elektromotor nach einem der vorhergehenden Ansprüche, dadurch gekennzeichnet, daß er einen Wellenstutzen (8) aufweist und daß sich die mit Aufnahmetaschen (32) versehenen Abschnitte (41) der Flansche (21) auf der dem Wellenstutzen (8) gegenüberliegenden Motorseite befinden.

11. Elektromotor nach einem der vorhergehenden Ansprüche, dadurch gekennzeichnet, daß jeder Spulenkörper (18, 19) auf einem Statorpol (5, 6) aufgesteckt und dadurch gehalten ist.

12. Elektromotor nach einem der vorhergehenden Ansprüche, dadurch gekennzeichnet, daß der Rotor (3) in mit dem Stator (2) fest verbundenen Lagerbügeln (9, 10) drehbar geführt ist und daß die Aufnahmetaschen (32) winkelversetzt, insbesondere um 90 versetzt, zur Bügellängserstreckung angeordnet sind.

13. Elektromotor nach einem der vorhergehenden Ansprüche, dadurch gekennzeichnet, daß jede Aufnahmetasche (32) von einem die Außenseite (31) des äußeren Flansches (21) überragenden Gehäuse (34) gebildet ist, in dem sich der Steckkontakt (35) befindet.

14. Elektromotor nach einem der vorhergehenden Ansprüche, dadurch gekennzeichnet, daß der Steckkontakt (35) in das Innere des Gehäuses (34) von der Einstecköffnung (38) hier eingeschoben und dort verrastet gehalten ist.

15. Elektromotor nach einem der vorhergehenden Ansprüche, dadurch gekennzeichnet, daß das Blechpaket (4) des Stators (2) das Gehäuse (34) radial überragt oder mit der entsprechenden Gehäuseaußenseite fluchtet.
